# EUROPÄISCHE PATENTSCHRIFT

(11) **EP 0 580 999 B1**
(45) Veröffentlichungstag und Bekanntmachung des Hinweises auf die Patenterteilung: **05.04.2000**
(21) Anmeldenummer: 93109334.8
(22) Anmeldetag: 11.06.1993
(51) Int. Cl.: H04L 12/56, H04Q 11/04, H04L 12/64

(54) **Raum- und Zeit-Vermittlungselement**
Space and time switching element
Commutateur spatial et temporel

(30) Priorität: 27.06.1992 DE 4221187
(43) Veröffentlichungstag der Anmeldung: 02.02.1994
(73) Patentinhaber: ALCATEL, 75008 Paris (FR)
(72) Erfinder: Gamm, Bernhard, D-7015 Korntal-Münchingen (DE)
(74) Vertreter: Brose, Gerhard, Dipl.-Ing.

(56) Entgegenhaltungen:
- TATSURO TAKAHASHI ET AL: "BROADBAND PACKET SWITCHING NETWORK FEATURING DYNAMIC LINK SPEED CONTROL" TRANSACTIONS OF THE INSTITUTE OF ELECTRONICS, INFORMATION AND COMMUNICATION ENGINEERS OF JAPAN, Bd. E71, Nr. 9, 1.September 1988, Seiten 869-875, XP000081502
- MALDEREN VAN R: "REVIEW OF THE FUNDAMENTAL CONCEPTS" ELEKTRISCHES NACHRICHTWESEN, 17.Dezember 1984, Seiten 20-28, XP000670560 & ELEKTRISCHES NACHRICHTENWESEN, Bd. 59, Nr. 1/2, 1985, Seiten 20-28,

## Beschreibung

Die Erfindung betrifft ein Raum- und Zeit-Vermittlungselement nach dem Oberbegriff des Anspruchs 1 und eine Möglichkeit der Verwendung eines solchen Vermittlungselements.

Derzeit vollzieht sich, zumindest in der Entwicklung, der Übergang vom herkömmlichen synchronen Zeitmultiplex, der jetzt als Synchronous Transfer Mode, STM, bezeichnet wird, zu einem neuen Übermittlungsmodus, dem Asynchronous Transfer Mode, ATM. Sowohl bei STM als auch bei ATM werden die zu übermittelnden Nachrichten in kleine Informationseinheiten zerlegt, zeitlich komprimiert und mit gleichartigen Informationseinheiten anderer Nachrichten zusammen übertragen.

Bei STM ist die Zugehörigkeit der einzelnen Informationseinheiten zu einer bestimmten Nachricht durch die periodisch wiederkehrende (synchrone) Lage innerhalb des Datenstroms festgelegt. Die Vermittlung erfolgt unter anderem durch eine vorgegebene zeitliche Verschiebung der Lage der Informationseinheiten.

Bei ATM kann die Zugehörigkeit einer Informationseinheit zu einer bestimmten Nachricht nicht aus der Lage im Datenstrom bestimmt werden und muß deshalb besonders gekennzeichnet werden. Die Informationseinheiten werden deshalb jeweils mit einem Kopfteil zu einem Datenpaket zusammengefaßt. Bei ATM werden diese Datenpakete als Zellen bezeichnet.

Während einer sicherlich sehr langen Übergangszeit werden STM und ATM nebeneinander vorkommen und es wird Übergangseinrichtungen zwischen STM und ATM geben müssen. Eine bekannte Lösung dieses Problems sind Paketierer und Depaketierer. Nur beispielhaft wird hierzu auf die in der DE 38 16 747.6 A1 anhand der Figuren 7 und 8 beschriebenen und auch dort schon als im Prinzip bekannt vorausgesetzten Paketierer und Depaketierer verwiesen.

Im weiteren wird in dem Artikel 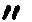 Broadband packet switching network featuring dynamic link speed control", Tatsuro Takahashi et al, Transactions of the Instiute of Electronics, Information and Communication Engineers of Japan, Bd. E71, Nr. 9, 1. September 1988, Seiten 869 bis 875 ein Pakervermittlungsknoten beschrieben, der an unterschiedliche Eingangs-und Ausgangsdatenraten anpassbar ist. Der Paketvermittlungsknoten verfügt über einen gemeinsamen Speicher, in dem sowohl die über eine Hochgeschwindigkeitsdatenverbindung ankommenden Daten als auch die über eine Datenverbindung mit geringerer Geschwindigkeit ankommenden Daten mittels eines Multiplexers zur Vermittlung eingetragen werden. Die Datenrate an den Ein- und Ausgängen des Paketvermittlungsknoten kann sich so unterscheiden und kann im weiteren auch verändert werden.

Eine andere Lösung dieses Problems wird durch die Lehre des Patentanspruchs 1 gegeben.

Diese Lösung, ein Vermittlungselement mit STM- und ATM-Ein- und Ausgängen, beruht auf der Tatsache, daß übliche Raum- und Zeit-Vermittlungselemente Speicher zum Zwischenspeichern von Signalen (Informationseinheiten) aufweisen, in die von Eingangsschaltungen her eingeschrieben und unabhängig davon zu Ausgangsschaltungen hin ausgelesen werden kann. Abgesehen vom Hinzufügen oder Weglassen der Kopfteile von Datenpaketen und von Leerinformation zur Formatanpassung funktionieren Paketierer und Depaketierer ebenso Diese Funktionen können aber von einem passend ausgestalteten Vermittlungselement mit übernommen werden.

Weiter beruht diese Lösung darauf, daß unterschiedliche Übermittlungsarten vor allem in Vermittlungsstellen zusammentreffen und daß am Übergang zwischen den peripheren Baugruppen und dem Koppelnetz einer Vermittlungsstelle in der Regel ohnehin Vermittlungselemente mit Sonderfunktionen vorhanden sind. Hierzu wird auf den Artikel "SYSTEM 12 - Übersicht über die Grundbegriffe" von R.Van Malderen in "Elektrisches Nachrichtenwesen", Band 59, Nummer 1/2, 1985, S. 20 - 28 verwiesen. Die dort in Bild 3 gezeigte und anhand dieses Bildes beschriebene "Zugangseinheit" ist ein derartiges Vermittlungselement, allerdings mit gleichem Datenformat an den Ein- und Ausgängen.

Die vorgenannten Überlegungen gelten auch dann, wenn nicht das herkömmliche genormte STM-Verfahren, sondern irgendeine schmalbandige Zeitmultiplex-Übermittlungsart und nicht das derzeit favorisierte ATM-Verfahren, sondern irgendeine, insbesondere auch synchrone, breitbandige Zeitmultiplex-Übermittlungsart aufeinandertreffen und eine passende Übergangseinrichtung zu schaffen ist (Anspruch 1).

Als vorteilhaft wird angesehen, ein breitbandiges digitales Koppelnetz mittels eines solchen Vermittlungselementes mit schmalbandigen peripheren Baugruppen zu verbinden (Anspruch 2).

Im folgenden wird die Erfindung anhand eines Ausführungsbeispieles unter Zuhilfenahme der beiligenden Zeichnungen weiter erläutert.
- Fig. 1: zeigt eine Vermittlungsstelle mit schmalbandiger Peripherie und breitbandigem Koppelnetz,
- Fig. 2: zeigt ein erfindungsgemäß aufgebautes Raum- und Zeit-Vermittlungselement zur Verwendung in der Vermittlungsstelle nach Fig. 1,
- Fig. 3: zeigt ein Blockschaltbild einer weiteren Baugruppe der Vermittlungsstelle nach Fig. 1.

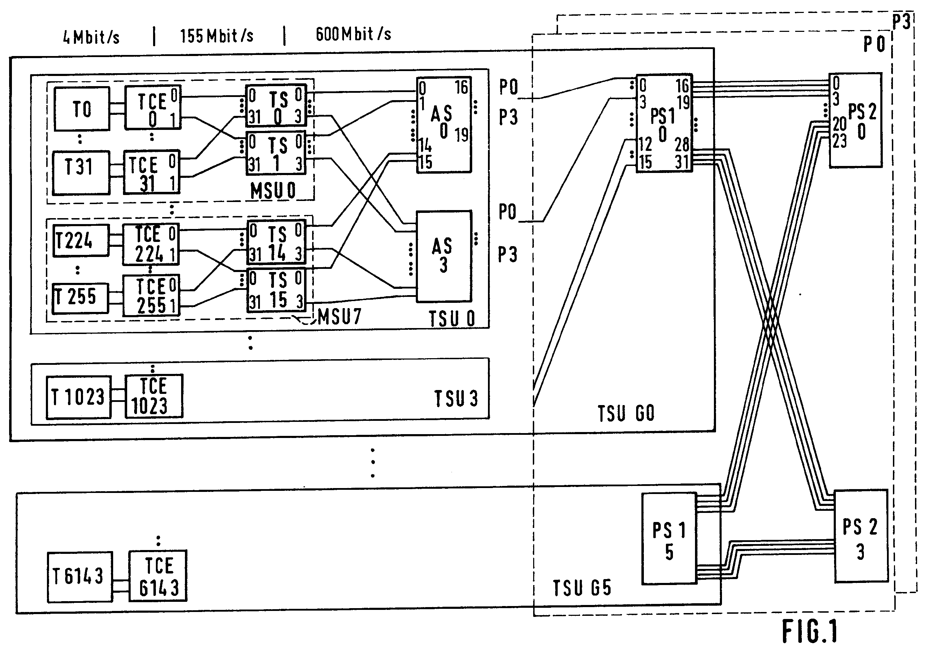

Fig. 1 zeigt eine komplette Vermittlungsstelle. Die Darstellung ist eng angelehnt an die Darstellung im o.g. Artikel von R.Van Malderen. Wie in solchen Darstellungen üblich, ist der Vollausbau gezeigt. Für den Fachmann ergibt es sich von selbst, welche Teile er bei weniger Anschlüssen oder geringerer Verkehrsdichte weglassen kann. Nicht gezeigt in dieser Darstellung sind die nach außen führenden Leitungen.

Kern der Vermittlungsstelle ist ein aus vier Ebenen P0, ..., P3 bestehendes Hauptkoppelfeld, das die eigentliche Vermittlungsaufgabe wahrnimmt. Das Hauptkoppelfeld ist in zwei Stufen aufgebaut. Die erste Stufe enthält in jeder der vier Ebenen sechs Koppelnetzbausteine PS10, ..., PS15. Die sechs Koppelnetzbausteine der ersten Stufe sind innerhalb jeder Ebene durch vier Koppelnetzbausteine PS20, ..., PS23 der zweiten Stufe untereinander verbunden.

Die gesamte Vermittlungsstelle, mit Ausnahme der zweiten Stufe des Hauptkoppelfeldes, ist in sechs Hauptgruppen TSUG0, ..., TSUG5 aufgeteilt. Jeweils einer der sechs Koppelnetzbausteine PS10, ..., PS15 der ersten Stufe bildet mit den drei in den anderen Ebenen liegenden entsprechenden Koppelnetzbausteinen und vier Untergruppen TSU0, ..., TSU3 eine solche Hauptgruppe.

Jede der jeweils vier Untergruppen, Fig. 1 zeigt die Untergruppe TSU0 der Hauptgruppe TSUG0 im Detail, weist vier Zugangs-Koppelnetzbausteine AS0, ..., AS3 und acht Vermittlungsmodule MSU0, ..., MSU7 auf. Das Vermittlungsmodul MSU0 besteht, wie jedes andere Vermittlungsmodul, aus zwei Abschluß-Koppeleinheiten TS0 und TS1 und 32 aus je einem Anschlußteil T0, ..., T31 und einer Modulsteuereinheit TCE0, ..., TCE31 bestehenden Anschlußmodule.

Bis auf die Abschluß-Koppeleinheiten TS0, ... und die fehlende mittlere Stufe im Hauptkoppelfeld entspricht dies der Anordnung in einer Vermittlungsstelle nach SYSTEM 12, wie sie in dem eingangs erwähnten Artikel dargestellt ist. Dieselbe Vermittlungsstelle ist auch beschrieben in den US-Patenten 4,201,889, 4,201,890 und 4,201,891.

In Abweichung von der bekannten Vermittlungsstelle nach SYSTEM 12 in manchen Ländern als Marke eingetragen wird im vorliegenden Fall jedoch mit unterschiedlich hohen Takten und damit unterschiedlich hohen Übertragungsgeschwindigkeiten gearbeitet.

In den Anschlußteilen T0, ..., T6143 und in den Modulsteuereinheiten TCE0, ..., TCE6143 wird, wie bei SYSTEM 12, mit 4 Mbit/s gearbeitet. Die Anschlußteile, in die der größte Entwicklungsaufwand, einschließlich des größten Teiles der Software, investiert ist, können unverändert übernommen werden.

In den Modulsteuereinheiten erfolgt ein Übergang von 4 Mbit/s auf 155 Mbit/s und umgekehrt. Die Zahl der Eingangs- und Ausgangsleitungen ist auf beiden Seiten gleich, nämlich je zwei. Damit ist die Kapazität auf der breitbandigen Seite, d.h. bei 155 Mbit/s, recht deutlich überdimensioniert. Durch diese Überdimensionierung ist diese breitbandige Seite in der Lage, viele den inneren Ablauf betreffende Steuerungs- und Signalisierungsaufgaben mit zu übernehmen, ohne die eigentliche Vemittlungsaufgabe irgendwie zu beeinträchtigen. Auch die Vermittlung von Kanalbündeln (nX64 kbit/s) ist ohne Blockierungsgefahr möglich.

In den Abschluß-Koppeleinheiten TS0, ... erfolgt eine weitere Erhöhung der übertragungsgeschwindigkeit von 155 Mbit/s auf 600 Mbit/s, verbunden mit einem Übergang auf optische Verbindungsleitungen. Dieser Übergang ist verbunden mit einer Konzentration des Verkehrs von 32 Eingangsleitungen auf vier Ausgangsleitungen.

Bis zur zweiten Stufe des Koppelnetzes kann noch weiter konzentriert werden, ohne lokale Blockierungen befürchten zu müssen.

Die breitbandige Seite ist im vorliegenden Beispiel in ATM-Technik aufgebaut. Der Begriff ATM wird hier in seiner noch etwas ursprünglicheren Bedeutung verwendet. Insbesondere eine besondere Normung der Länge der Zellen wird hier nicht vorausgesetzt. Besonders vorteilhaft, wenn auch nicht zwingend, ist hier die Verwendung unterschiedlich langer ATM-Zellen im Koppelnetz. Für die Durchschaltung einer Verbindung mit 64 kbit/s wird dabei die kürzestmögliche Länge verwendet; bei Datenpaketen, insbesondere Steuerdatenpaketen, wird die Länge der Zellen an die der Datenpakete angepaßt.

Die Koppelnetzbausteine AS0, ..., AS3; PS10, ..., PS15 und PS20, ..., PS23 weisen je 32 Eingänge und 32 Ausgänge aus. Deren Realisierung ist beschrieben in "Elektrisches Nachrichtenwesen", Band 64, Nummer 2/3, 1990 von D. Becker et al, S. 147 - 155, "Architektur des Breitbandvermittlungssystems von Alcatel" und von D. Böttle et al, S. 156 - 165, "Das ATM-Koppelfeld von Alcatel und seine Eigenschaften". Diese Koppelnetzbausteine sind dort als Koppelbaugruppe bzw. Grundkoppelmodul bezeichnet. Diese Koppelnetzbausteine sind auch im US-Patent 5,091,903 beschrieben.

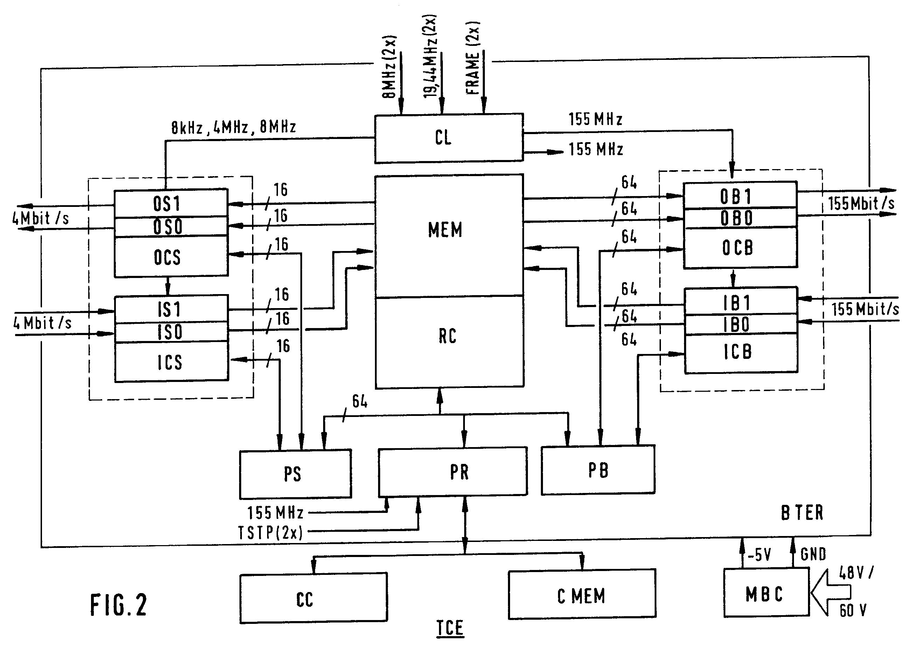

Anhand der Fig. 2 wird nun der Aufbau einer Modulsteuereinheit TCE beschrieben.

Die Modulsteuereinheit TCE weist grundsätzlich denselben Aufbau auf, wie die Modulsteuereinheit im schon mehrfach genannten SYSTEM 12 (z.B. nach Bild 3 des Artikels von R.Van Malderen). Der Hauptteil ist eine Zugangseinheit BTER, die durch ein Steuerteil mit einem Steuerprozessor CC und einem zugehörigen Speicher CMEM ergänzt wird. Fig. 2 zeigt außerdem noch einen Spannungskonverter MBC, der die gegebene Betriebsspannung von 48 V oder 60 V auf die benötigte einseitig geerdete Spannung von -5 V umsetzt.

Die Zugangseinheit BTER ist ein Vermittlungselement. Im vorliegenden Fall hat es zwei schmalbandige Eingänge mit den schmalbandigen Eingangsschaltungen IS0 und IS1 und einer zugehörigen schmalbandigen Eingangsschaltungssteuerung ICS und zwei schmalbandige Ausgänge mit den schmalbandigen Ausgangsschaltungen OS0 und OS1 und einer zugehörigen schmalbandigen Ausgangsschaltungssteuerung OCS sowie zwei breitbandige Eingänge mit den breitbandigen Eingangsschaltungen IB0 und IB1 und einer zugehörigen breitbandigen Eingangsschaltungssteuerung ICB und zwei breitbandige Ausgänge mit den breitbandigen Ausgangsschaltungen OB0 und OB1 und einer zugehörigen breitbandigen Ausgangsschaltungssteuerung OCB.

Die Ein- und Ausgänge sind untereinander unter Zuhilfenahme eines Datenspeichers MEM verbunden. Von jeder Eingangsschaltung aus kann in jedes Speicherelement des Datenspeichers MEM eingeschrieben werden; aus jedem Speicherelement kann wiederum zu jeder Ausgangsschaltung hin ausgelesen werden. Die erforderlichen Multiplexer- und Demultiplexerfunktionen sind in Fig. 2 nicht eingezeichnet. Insgesamt ergibt sich derselbe Grundaufbau wie in Bild 7 des genannten Artikels von D. Böttle et al. oder wie in Fig. 5 des genannten US-Patentes 5,091,903. Im übrigen sind dieser Grundaufbau sowie die notwendigen Detailgestaltungen jedem Fachmann auf diesem Gebiet bekannt.

Im vorliegenden Fall sind nun die breitbandigen Ein-und Ausgänge als ATM-Ein- und -Ausgänge wie in den oben genannten Beispielen ausgeführt, während die schmalbandigen Ein- und Ausgänge im Prinzip wie bei SYSTEM 12 ausgeführt sind.

Zum Aufbau des Vermittlungselementes bei SYSTEM 12 wird auf einen Artikel von W. Frank et al. verwiesen, der 1985 erschienen ist in "Elektrisches Nachrichtenwesen", Band 59, Nummer 1/2, Seiten 54 - 59 mit dem Titel "SYSTEM 12 - Doppelport des Koppelnetzbausteins". Auch die zu SYSTEM 12 bereits genannten US-Patente beschreiben das Vermittlungselement. Abweichend von der Realisierung bei SYSTEM 12 wird im vorliegenden Fall jedoch ein zentraler Datenspeicher und nicht eine Vielzahl den einzelnen Ausgängen zugeordneter Datenspeicher verwendet. Werden im vorliegenden Fall den beiden schmalbandigen Ausgangsschaltungen OS0 und OS1 bestimmte Speicherelemente des Datenspeichers MEM fest zugeordnet, so ist insoweit wieder Übereinstimmung gegeben.

Auf der Schmalbandseite erfolgt der Datenfluß zwischen den Eingangsschaltungen, dem Datenspeicher und den Ausgangsschaltungen durch 16 Bit breite, parallel übertragene Datenwörter. Auf der Breitbandseite werden Datenwörter mit 64 Bit verwendet. Die 16 Bit auf der Schmalbandseite entsprechen je einem Zeitschlitz im dort verwendeten Zeitmultiplex. Die 64 Bit auf der Breitbandseite entsprechen je einem ATM-Datenpaket.

Dem Datenspeicher MEM ist eine Wegewahlsteuerung RC angegliedert. Diese fügt den von den schmalbandigen Eingangsschaltungen kommenden Datenwörtern je einen Paketkopf hinzu, der für die Vermittlung im ATM-Koppelnetz und für die Zuordnung ins der ausgangsseitigen Modulsteuereinheit benötigt wird. Jedem Zeitschlitz in jeder der beiden schmalbandigen Eingangsschaltungen wird während des Verbindungsaufbaus eindeutig ein Paketkopf zugeordnet. Umgekehrt ist jedem von den breitbandigen Eingangsschaltungen kommenden Paketkopf eindeutig ein Zeitschlitz einer der beiden schmalbandigen Ausgangsschaltungen zugeordnet. Ein Teil der 64 Bits eines breitbandigen Datenworts bleibt unbenutzt.

Die Zugangseinheit BTER enthält weiter einen Taktgenerator Cl, der Takte mit 8 kHz, 4 MHz, 8 MHz und 155 MHz erzeugt. Diese Takte sind auf von außen zugeführte Takte von 8 MHz, 19,44 MHz und einen Rahmentakt FRAME synchronisiert. Die von außen kommenden Takte sind aus Zuverlässigkeitsgründen dupliziert. Die Frequenzangaben sind hier teilweise (auch unterschiedlich wie bei 150 Mbit/s und 155 Mbit/s) gerundet.

Die zugrundeliegende Vermittlungsstelle vom Typ SYSTEM 12 hat auch die Möglichkeit, Datenpakete zu vermitteln sowie die Modulsteuereinheiten untereinander durch Datenpakete kommunizieren zu lassen.

Auch diese Möglichkeiten sind hier vorgesehen. Zu diesem Zweck, der unter anderem dem Verbindungsauf- und -abbau dient, sind noch ein schmalbandiger Steuerein- und -ausgang PS, ein breitbandiger Steuerein- und -ausgang PB und eine dazugehörige Wegelenkeinrichtung PR vorhanden. Diese sind untereinander und mit der Wegewahlsteuerung RC durch einen 64 Bit breiten Bus verbunden. Die Steuerein- und -ausgänge PS und PB sind mit den zugehörigen Eingangs- und Ausgangsschaltungssteuerungen ICS und OCS bzw. ICB und OCB über 16 bzw. 64 Bit breite parallele Datenleitungen verbunden. Außerdem ist die Wegelenkeinrichtung PR mit dem Steuerprozessor CC und dessen Speicher CMEM über einen 32 Bit breiten Bus verbunden.

Auf der Schmalbandseite werden Datenpakete als Ganzes einschließlich des Paketkopfes in aufeinanderfolgenden, demselben Übertragungskanal zugehörigen Zeitschlitzen übertragen. In einer der beiden schmalbandigen Eingangsschaltungen IS0 und IS1 ankommende Datenpakete werden durch die zugehörige Eingangsschaltungssteuerung ICS als solche erkannt und, unterstützt durch den Steuerprozessor CC, über den schmalbandigen Steuerein- und -ausgang PS und die Wegelenkeinrichtung PR in den Speicher CMEM eingeschrieben. Umgekehrt werden für die Schmalbandseite bestimmte Datenpakete vom Speicher CMEM über die Wegelenkeinrichtung PR, den schmalbandigen Steuerein- und -ausgang PS und die schmalbandige Ausgangsschaltungssteuerung OCS über die vorgesehene schmalbandige Ausgangsschaltung OS0 oder OS1 ausgegeben. Ganz entsprechend erfolgt der Austausch von Datenpaketen zwischen einer der breitbandigen Eingangsschaltungen IB0 und IB1 und dem Speicher CMEM und zwischen diesem und einer der breitbandigen Ausgangsschaltungen OB0 und OB1. Abweichend ist hier nur das Datenformat.

Datenpakete, die nicht für diese Modulsteuereinheit bestimmt sind, werden zunächst von der einen Seite her in den Speicher CMEM eingeschrieben und dann aus diesem zur anderen Seite hin ausgegeben. Beides verläuft wie oben beschrieben.

Eingezeichnet ist noch die Tatsache, daß die Wegelenkeinrichtung PR vom Taktgenerator Cl mit dem Takt von 155 MHz und von außen mit Zeitmarken TSTP versorgt wird. Die Zeitmarken, die ebenfalls dupliziert zugeführt werden, werden den Datenpaketen innerhalb des Koppelnetzes mitgegeben.

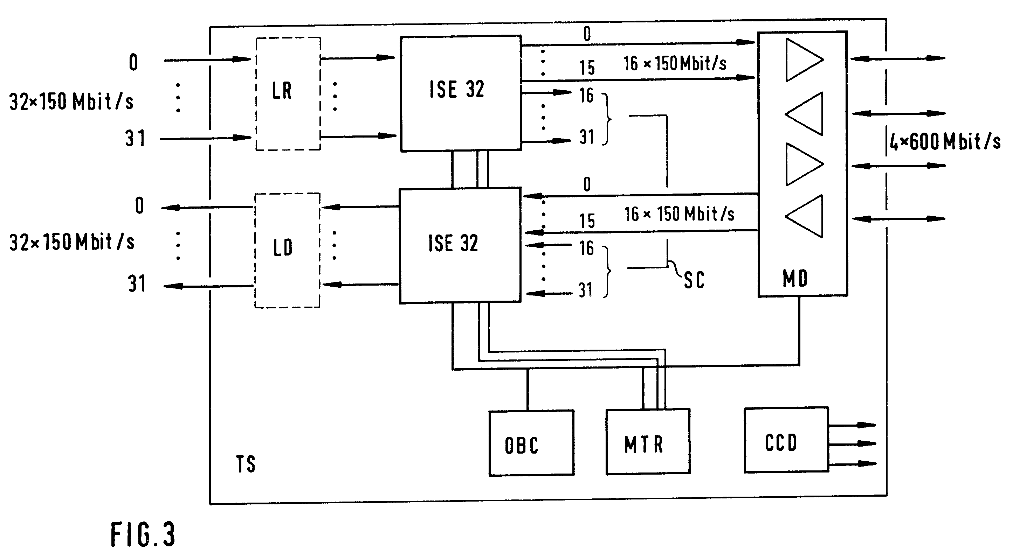

Anhand der Fig. 3 wird abschließend noch der Aufbau einer Abschluß-Koppeleinheit TS beschrieben. Die Abschluß-Koppeleinheit TS weist zwei Koppelnetzbausteine ISE32, einen Multiplexer/Demultiplexer MD, eine Steuereinheit OBC, eine Wartungs- und Test-Einrichtung MTR und eine Taktversorgungseinrichtung CCD auf. Als Zusätze sind Leitungsempfänger LR und Leitungssender LD sowie Kurzschlußbrücken SC vorgesehen.

Die beiden Koppelnetzbausteine ISE32 weisen je 32 Eingänge und 32 Ausgänge auf. Jeder Koppelnetzbaustein ist für eine der beiden Richtungen zuständig. Die Koppelnetzbausteine unterscheiden sich nicht prinzipiell von den Koppelnetzbausteinen der ersten oder zweiten Stufe, PS10, ..., PS15; PS20, ..., PS23 und den Zugangs-Koppelnetzbausteinen AS0, ..., AS3.

In der Richtung von der Peripherie zum Koppelnetz erfolgt eine Konzentration von 32 Eingangs- auf 16 Ausgangsleitungen mit je 150 Mbit/s. Im Multiplexerteil des Muldex MD wird der Verkehr von 16 mal 150 Mbit/s auf 4 mal 600 Mbit/s umverteilt. In der Gegenrichtung wird im Demultiplexerteil des Muldex MD von 4 mal 600 Mbit/s auf 16 mal 150 Mbit/s umverteilt und im zugehörigen Koppelnetzbaustein ISE32 von 16 Eingangsauf 32 Ausgangsleitungen aufgeteilt.

Der Muldex MD faßt außerdem auf der Seite mit 600 Mbit/s die beiden Richtungen auf derselben Leitung zusammen und setzt auf dieser Seite auch zwischen elektrischen Signalen im Muldex und optischen Signalen auf den Leitungen um.

An dieser Stelle wird noch darauf hingewiesen, daß in den Figuren 2 und 3 die beiden Richtungen explizit gezeigt sind, während in Fig. 1 immer für beide Richtungen eine Verbindung eingezeichnet ist, unabhängig davon, ob diese auf einer gemeinsamen Leitung oder auf getrennten Leitungen geführt werden. Dies ist prinzipiell auch unerheblich.

Die 16 zunächst noch freien Aus- bzw. Eingänge der beiden Koppelnetzbausteine ISE32 können durch Kurzschlußbrücken SC verbunden sein, um so eine frühe Umkehrmöglichkeit zu bieten.

Leltungsempfänger LR und Leitungssender LD werden dann eingesetzt, wenn die Leitungslängen zu den angeschlossenen Modulsteuereinheiten dies erfordern.

Die Steuerung der Abschluß-Koppeleinheit TS erfolgt in an sich bekannter Weise durch die Steuereinrichtung OBC. Auch die Wartungs- und Test-Einrichtung MTR ist, wie auch die Leitungsempfänger LR, die Leitungssender LD und der Muldex MD in bekannter Weise und nicht erfindungsspezifisch aufgebaut.

Der Einsatz von Abschluß-Koppeleinheiten TS ist nicht erfindungswesentlich. Es könnten auch Koppelnetzstrukturen ohne solche Abschluß-Koppeleinheiten verwendet werden, wie auch grundsätzlich andere Koppelnetzstrukturen möglich sind.

## Patentansprüche

1. Raum- und Zeit-Vermittlungselement (BTER) mit einer Mehrzahl von Eingangsschaltungen (IS0, IS1, IB0, IB1) für je eine Eingangsleitung, auf der im Zeitmultiplex eine Mehrzahl von Eingangssignalen empfangbar ist, mit einer Mehrzahl von Ausgangsschaltungen (OS0, OS1, OB0, OB1) für je eine Ausgangsleitung, auf der im Zeitmultiplex eine Mehrzahl von Ausgangssignalen abgebbar ist und mit Speichern (MEM) zum Zwischenspeichern von Signalen,
**dadurch gekennzeichnet,** daß ein Teil der Eingangsschaltungen (IS0, IS1) und Ausgangsschaltungen (OS0, OS1) für schmalbandige Eingangs- bzw. Ausgangssignale und ein anderer Teil der Eingangsschaltungen (IB0, IB1) und Ausgangsschaltungen (OB0, OB1) für breitbandige Eingangs- bzw. Ausgangssignale vorgesehen ist, daß jede schmalbandige Eingangsschaltung mit jeder breitbandigen Ausgangsschaltungen und jede breitbandige Eingangsschaltung mit jeder schmalbandigen Ausgangschaltung über die Speicher (MEM) verbindbar ist, und daß die schmalbandigen Eingangs- und Ausgangssignale synchrone Zeitmultiplexsignale und die breitbandigen Eingangs- und Ausgangssignale asynchrone Zeitmultiplexsignale sind.

2. Verwendung des Vermittlungselements nach Anspruch 1 zur Verbindung eines breitbandigen digitalen Koppelnetzes mit schmalbandigen peripheren Baugruppen.

## Claims

1. A space- and time switching element (BTER) with a plurality of input circuits (IS0, IS1, IB0, IB1) in each case for an input line on which a plurality of input signals can be received in time division multiplex, with a plurality of output circuits (OS0, OS1, OB0, OB1) in each case for an output line on which a plurality of output signals can be emitted in time division multiplex, and with memories (MEM) for the intermediate storage of signals,
characterised in that a part of the input circuits (IS0, IS1) and output circuits (OS0, OS1) is provided for narrow-band input- and output signals and another part of the input circuits (IB0, IB1) and output circuits (OB0, OB1) is provided for wide-band input- and output signals, that each narrow-band input circuit can be connected to each wide-band output circuit, and each wide-band input circuit can be connected to each narrow-band output circuit via the memories (MEM), and that the narrow-band input- and output signals are synchronous time division multiplex signals and the wide-band input- and output signals are asynchronous time division multiplex signals.

2. The use of the switching element according to Claim 1 for connecting a wide-band digital switching network to narrow-band peripheral assemblies.

## Revendications

1. Elément de commutation spatiale et temporelle (BTER) avec une pluralité de circuits d'entrée (IS0, IS1, IB0, IB1) pour respectivement une ligne d'entrée, sur laquelle une pluralité de signaux d'entrée peuvent être reçus en multiplexage temporel, avec une pluralité de circuits de sortie (OS0, OS1, OB0, OB1) pour respectivement une ligne de sortie, sur laquelle une pluralité de signaux de sortie peuvent être délivrés en multiplexage temporel, et avec des mémoires (MEM) pour tamponner des signaux,
caractérisé en ce qu'une partie des circuits d'entrée (IS0, IS1) et des circuits de sortie (OS0, OS1) est prévue pour des signaux d'entrée ou de sortie à bande étroite et une autre partie des circuits d'entrée (IB0, IB1) et des circuits de sortie (OB0, OB1) est prévue pour des signaux d'entrée ou de sortie à bande large, en ce que chaque circuit d'entrée à bande étroite peut être relié à chaque circuit de sortie à bande large et chaque circuit d'entrée à bande large peut être relié à chaque circuit de sortie à bande étroite par l'intermédiaire de la mémoire (MEM), et en ce que les signaux d'entrée et de sortie à bande étroite sont des signaux de multiplexage temporel synchrones et les signaux d'entrée et de sortie à bande large sont des signaux de multiplexage temporel asynchrones.

2. Utilisation de l'élément de commutation selon la revendication 1 pour relier un réseau de couplage numérique à bande large à des ensembles périphériques à bande étroite.
